# EUROPÄISCHE PATENTSCHRIFT

(11) **EP 2 022 653 B1**
(45) Veröffentlichungstag und Bekanntmachung des Hinweises auf die Patenterteilung: **18.05.2011**
(21) Anmeldenummer: 08013140.2
(22) Anmeldetag: 22.07.2008
(51) Int. Cl.: B60C 27/18

(54) **Wendbare Gleitschutzvorrichtung**
Rotatable anti-skid device
Dispositif antidérapant pouvant être retourné

(30) Priorität: 06.08.2007 DE 102007036855
(43) Veröffentlichungstag der Anmeldung: 11.02.2009
(73) Patentinhaber: RUD Ketten Rieger & Dietz GmbH u. Co. KG, 73432 Aalen-Unterkochen (DE)
(72) Erfinder:
(74) Vertreter: Rüger, Barthelt & Abel Patentanwälte

(56) Entgegenhaltungen:
- EP-A- 1 745 948
- WO-A-00/59745
- DE-A1- 2 108 386

## Beschreibung

Um die Traktion auf winterlichen Fahrbahnen (schnee- und/oder eisbedeckten Straßen) zu verbessern kommen Winterreifen in Frage. Die in den letzten Jahren signifikanten Leistungssteigerungen bei Winterreifen durch neue Mischungs- und Profilentwicklungen, sollen durch Verwendung von "Gleitschutzvorrichtungen" nachhaltig verbessert werden.

Zur Verbesserung der Traktion sind ferner textile Gleitschutzvorrichtungen bekannt. Diese weisen einen als Gewebe ausgeführten Laufgürtel auf, der an seinen beiden in Umfangsrichtung verlaufenden Kanten jeweils mit Fixiermitteln versehen ist. Die Fixiermittel sind mit dem Laufgürtel vernäht. Sie bestehen aus Gewebe und haben den Zweck den Laufgürtel im Betrieb daran zu hindern in axialer Richtung der Lauffläche des Reifens herunter zu wandern.

Die Traktionseigenschaften der bekannten Gleitschutzvorrichtungen auf Eis sind verbesserungsfähig.

Die WO 00/59745 zeigt eine gattungsbildende Gleitschutzvorrichtung für Fahrzeugräder. Diese Gleitschutzvorrichtung weist einen Gürtel auf, der auf der Lauffläche des Reifens aufliegt. Seitlich des Gürtels sind zwei Fixiereinrichtungen vorgesehen, die den Gürtel auf der Lauffläche des Reifens halten sollen. Der Gürtel selbst ist ein Gewebe um die Traktion auf der eis- oder schneebedeckten Straße zu verbessern.

Die Druckschrift enthält ferner mehrere Ausführungsbeispiele, die sich mit den Fixiermitteln befassen. So sind Fixierringe ebenfalls aus Textilmaterial beschrieben, ebenso wie die gekreuzte Bänder als auch Gummiringe, die auf der Radinnenseite mit Hilfe von Schlaufen mit dem Laufgürtel verbunden sind.

Aus der DE 21 08 386 ist eine Gleitschutzvorrichtung bekannt, bei der der auf dem Reifen aufliegende Gürtel aus einem Gewebe in Leinwandbindung besteht. In diesem Gürtel sind Schleif- oder Schmirgelkörper eingebettet, um die Traktion zu verbessern.

Ausgehend hiervon ist es Aufgabe der Erfindung eine Gleitschutzvorrichtung zu schaffen, eine Gleitschutzvorrichtung zu schaffen, die eine sehr gute Traktion auf Eis zeigt.

Diese Aufgabe wird erfindungsgemäß durch eine Gleitschutzvorrichtung mit den Merkmalen des Anspruches 1 gelöst.

Die neue Gleitschutzvorrichtung ist dazu vorgesehen an Kraftfahrzeugrädern montiert zu werden, die eine Radinnenseite und eine Radaußenseite sowie eine Lauffläche aufweisen. Ein erstes Fixiermittel der Gleitschutzvorrichtung liegt bei montierter Gleitschutzvorrichtung an der Radinnenseite während ein zweites Fixiermittel bei montierter Gleitschutzvorrichtung auf der Radaußenseite angeordnet ist. Zwischen den beiden Fixiermitteln erstreckt sich ein Laufgürtel, der bei montierter Gleitschutzvorrichtung auf der Lauffläche des Reifens aufliegt. Die bei der Benutzung der Gleitschutzvorrichtung auftretenden Fliehkräfte im Laufgürtel werden im Laufgürtel selbst aufgenommen, der hierzu in Umfangsrichtung fest genug ist. Die Fliehkräfte werden jedenfalls vom Laufgürtel nicht oder nur in einem sehr geringen Umfang auf die Fixiermittel übertragen.

Der Laufgürtel weist einen Träger auf, der auf der von der Lauffläche wegweisenden Seite eine Vielzahl von Trägerfilamenten erkennen lässt, die zumindest angenähert parallel mit Abstand nebeneinander liegen.

Die Umwindefilamente umgeben die Trägerfilamente zumindest über einen Umfangswinkel von mehr als 40° und bilden längs jedes Trägerfilaments voneinander beabstandete Erhöhungen auf den Trägerfilamenten und von denen jedes betrachtete Umwindefilament ein betrachtetes Trägerfilament auf der Kontaktseite zum Untergrund mehrfach kreuzt.

Es ist zumindest bei einer vorteilhaften Ausführungsform ferner eine Vielzahl von Umwindefilamenten vorhanden, die die Trägerfilamente zumindest über einen Umfangswinkel von mehr als 60° umgeben. Auch hier bilden die Umwindefilamente längs jedes Trägerfilaments voneinander beabstandete Erhöhungen auf den Trägerfilamenten.

Jedes betrachtete Umwindefilament kreuzt ein betrachtetes Trägerfilament auf der Laufseite der Gleitschutzvorrichtung vielfach.

Ohne Anspruch auf Vollständigkeit geht die bisherige Erklärung für die guten Traktionseigenschaften dahin, dass die Umwindefilamente sich bei der Benutzung in die Eisoberfläche eindrücken und zwischen dem Eis und den Umwindefilamenten ein Formschluss entsteht. Der Abstand der Umwindefilamente voneinander muss auf die Kraft am Fahrzeugrad abgestimmt sein, damit das gewünschte Eindrücken entsteht. Sind zu viele Erhöhrungen vorhanden, kommt das Eindrücken der Umwindefilamente in die Eisoberfläche nicht zustande, womit es an dem gewünschten Formschluss fehlt.

Ist hingegen die Anzahl der Erhöhungen, gebildet durch die Umwindefilamente, zu klein, entsteht zwar ein Formschluss aber es entstehen nicht genügend Kontaktflächen, um eine hinreichende Antriebskraft übertragen zu können.

Die für den jeweiligen Fahrzeugtyp und Reifentyp günstigste Anzahl von Erhöhungen pro cm² Aufstandsfläche der Gleitschutzvorrichtung kann experimentell ermittelt werden.

Die Filamente, d.h. sowohl das Umwindefilament als auch das Trägerfilament sind vorzugsweise jeweils Monofilamente, die zylindrisch sind.

Als Umwindefilament kommt Polyester oder Edelstahl in Frage.

Zur Erhöhung der Traktion auf Eis sind außer dem Umwindefilamenten keine weiteren Maßnahmen erforderlich und auch nicht vorgesehen.

Das erste Fixiermittel bildet vorzugsweise einen Ring. Dieser Ring kann von einem Gewebe gebildet sein.

An dem ersten Fixiermittel entsteht an der von dem Laufgürtel abliegenden Seite eine Kante, die kreisförmig verläuft und die vorzugsweise elastisch gestaltet ist. Hierzu ist die Kante zu einer schlauchförmigen Schlaufe gelegt, in der ein elastomerer Ring eingefügt ist.

Das zweite Fixiermittel kann in ähnlicher Weise gestaltet werden, oder von einem textilen Flächenelement, vorzugsweise ein Gewebe, gebildet sein.

Das zweite Fixiermittel kann die Radaußenseite vollflächig überdecken.

Der Laufgürtel der Gleitschutzvorrichtung ist zweckmäßigerweise biegeschlaff, was u.a. auch der Möglichkeit des Verstauens entgegen kommt. Darüber hinaus hat ein biegeschlaffer Laufgürtel den Vorteil, sich in das Reifenprofil zu schmiegen, so dass bei Belastung mit nachgiebigem Schnee sich das Reifenprofil auf der zusammengedrückten Schneeoberseite abprägt. Hierdurch kommt ein formschlüssiges Zusammenwirken zwischen der Lauffläche, gebildet durch die Lauffläche des Laufgürtels, und den von dem Reifenprofil erzeugten Unebenheiten auf der Schneeoberseite zustande.

Der biegeschlaffe Laufgürtel kann mit Hilfe eines textilen Flächengebildes erzeugt werden, in dem der Laufgürtel ein solches textiles Flächengebilde aufweist oder vollständig daraus besteht.

Das textile Flächengebilde kann ein Gewebe sein, bei dem es besonders einfach ist, in genau vorherbestimmter Weise die jeweiligen Eigenschaften zu erzeugen.

Auch bei der wendbaren Gleitschutzvorrichtung ist es von Vorteil, wenn die Eisseite eine Vielzahl von Trägerfilamenten aufweist sowie eine Vielzahl von Umwindefilamenten. Die Umwindefilamente umgeben die Trägerfilamente zumindest um einen Umfangswinkel von mehr als 60° und erzeugen längs dem Trägerfilament voneinander beabstandete Erhöhungen. Jedes einzelne betrachtete Umwindefilament kreuzt ein betrachtetes Trägerfilament auf der Kontaktseite zum Untergrund vielfach.

Damit die gewünschte Wirkung zustande kommt, müssen die Trägerfilamente eine hinreichende Härte zeigen. Hierdurch soll erreicht werden, dass die Trägerfilamente als Stütze für die Umwindefilamente dienen und sich die Umwindefilamente in das Eis eindrücken können. Eine günstige Härte für die Trägerfilamente beginnt bei einem E-Modul von 3000 N/mm², vorzugsweise bei ca. 250 bis 700 cN/tex. Die Härte kann entsprechend bei einem E-modul von ca. 1800 cN/tex vorzugsweise bei einem E-modul von ca 1000 cN/tex enden.

Die Umwindefilamente müssen ebenfalls hinreichend fest sein, damit die gewünschte Wirkung zustande kommt. Sie müssen härter sein als Eis bei der Temperatur, bei der die Gleitschutzvorrichtung angewendet werden soll, d. h., bei einem Temperaturbereich des Eises zwischen -10°C und 0°C liegt. Eine brauchbare Härte für die Umwindefilamente beginnt bei einem E-Modul von 3000 N/mm², vorzugsweise bei ca. 250 bis 700 cN/tex.

Bei einer wendbaren Gleitschutzvorrichtung können die Umwindefilamente auf der Schneeseite sichtbar sein, brauchen diese jedoch nicht, da ihr Durchmesser so klein ist, dass sie keinen Betrag zur Traktion auf Schnee liefern.

Die Trägerfilamente können Schussfäden oder Kettfäden eines Gewebes sein.

Die Umwindefilamente dagegen können von Kettfäden gebildet werden. Spezielle Drehergewebe sorgen dafür, dass das Trägerfilament im Wesentlichen gerade durchläuft während das Umwindefilament zwischen jeweils benachbarten Schussfäden im Gewebe von der rechten auf die linke Seite des betreffenden Trägerfilaments und zurück wechselt; es liegt quasi im Zickzack. Dadurch entstehen die gewünschten Überkreuzungen zwischen dem Umwindefilament und dem zugehörigen Trägerfilament.

Eine andere Möglichkeit die gewünschte Überkreuzung zu erzielen besteht darin, das Trägerfilament schraubenförmig über die gesamte Länge mit dem Umwindefilament zu bewickeln. Derartige Garne sind handelsüblich.

Das Trägerfilament hat einen Durchmesser zwischen 0,2 mm und 1 mm. Vorzugsweise liegt der Durchmesser um 0,5 mm.

Der Durchmesser des Umwindefilaments liegt zwischen 0,05 mm und 0,2 mm, vorzugsweise bei 0,1 mm.

Das Material für das Trägerfilament sowie für das Umwindefilament oder, falls noch Multifilamentgarne verarbeitet werden, kann Polyester sein. Dieses Material zeigt eine genügende Widerstandsfestigkeit, Härte und Elastizität bei niedrigen Temperaturen.

Im Übrigen sind Weiterbildungen der Erfindung Gegenstand von Unteransprüchen.

Die nachfolgende Figurenbeschreibung erläutert Aspekte zum Verständnis der Erfindung. Weitere, nicht beschriebene Details kann der Fachmann in der gewohnten Weise den Zeichnungen entnehmen, die insoweit die Figurenbeschreibung ergänzen. Es ist klar, dass eine Reihe von Abwandlungen möglich sind.

Die nachfolgenden Zeichnungen sind nicht unbedingt maßstäblich. Zur Veranschaulichung der wesentlichen Details kann es sein, dass bestimmte Bereiche übertrieben groß dargestellt sind. Darüber hinaus sind die Zeichnungen plakativ vereinfacht und enthalten nicht jedes bei der praktischen Ausführung gegebenenfalls vorhandene Detail. Die Begriffe "innen" und "außen" beziehen sich auf die normale Gebrauchslage bzw. Terminologie bei Kraftfahrzeugen.

In der Zeichnung sind Ausführungsbeispiele des Gegenstandes der Erfindung dargestellt:
- Fig. 1: zeigt einen Kraftfahrzeugreifen in Verbindung mit einer erfindungsgemäßen Gleitschutzvorrichtung, in perspektivischer Darstellung.
- Fig. 2: zeigt einen Ausschnitt aus einem Laufgürtel unter Verwendung eines Drehergewebes.
- Fig. 3: zeigt einen Ausschnitt aus dem Laufgürtel der Gleitschutzvorrichtung nach Fig. 1 unter Verwen- dung eines Gewebes in Leinwandbindung mit Umwin- degarnen.

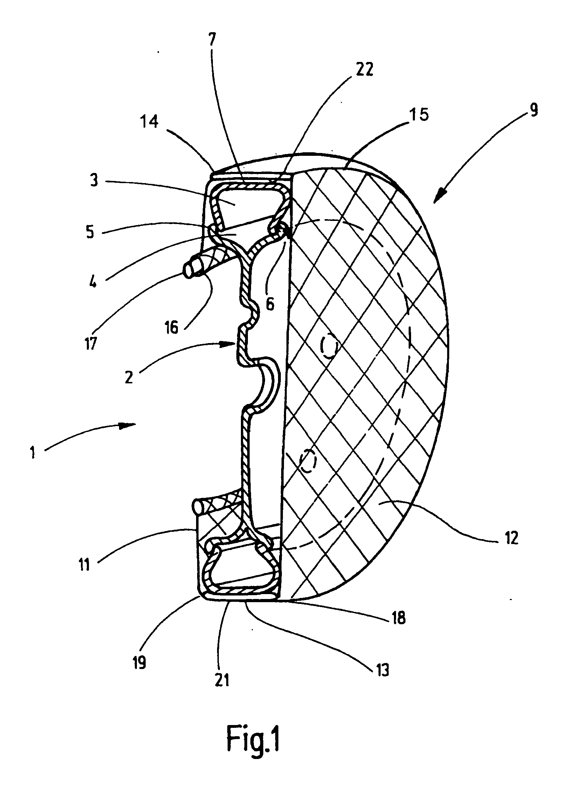

Fig. 1 zeigt in einer perspektivischen Darstellung aufgeschnitten ein Fahrzeugrad 1, zu dem eine Felge 2 sowie ein Reifen 3 gehören. Von der Felge 2 ist deren Felgenbett 4 zu erkennen, das seitlich von Felgenhörnern 5, 6 begrenzt ist. In dem Felgenbett 4 sitzt der Reifen, der ein üblicher schlauchloser Reifen ist und eine radial nach außen zeigende angenäherte zylinderförmige Lauffläche 7 aufweist.

Auf dem Fahrzeugrad 1 sitzt eine insgesamt mit 9 bezeichnete Gleitschutzvorrichtung. Zu der Gleitschutzvorrichtung gehört ein innerer Fixierring 11 sowie ein äußeres Fixiermittel 12. Zwischen beiden Fixiermitteln 11 und 12 erstreckt sich ein Laufgürtel 13, der seitlich von zwei zueinander parallelen Kanten begrenzt ist. Mit der Kante ist der innere Fixierring 11 beispielsweise durch Nähen verbunden. Die innenliegende Kante des Fixierrings 11 ist zu einer schlauchförmigen Schlaufe 16 gelegt, in der ein elastomerer Ring, beispielsweise ein Gummiring 17, enthalten ist um den Innenrand des Fixierrings 11 zu spannen.

Der innere Fixierring 11 wird von einem Gewebe, beispielsweise in Leinwandbindung, gebildet. Das Hauptmaterial ist Polyester und zwar in Form von Polyestergarnen, die aus Monofilamenten zu einem Multifilament versponnen sind.

Das Fixiermittel 12 auf der Außenseite ist ebenfalls ein Gewebe, das im Sinne einer Gewichtsersparnis möglichst offen gewebt ist. Es ist kreisförmig zugeschnitten und überspannt die gesamte Radaußenseite. Randseitig ist das Fixiermittel 12 ebenfalls mit dem Laufgürtel 13 vernäht.

Der Laufgürtel 13 wird von einem textilen Flächengebilde gebildet, vorzugsweise mit leinwandartiger Bindungsstruktur.

Gemäß einem Aspekt ist die Gleitschutzvorrichtung 3 wendbar.

Der Laufgürtel 13 bildet zwei Laufflächen, eine in Fig. 1 radial nach außen zeigende Lauffläche 18 und eine in der gezeigten Form der Lauffläche 7 des Reifens 3 zugekehrte Lauffläche 19.

Erfindungsgemäß kann die Gleitschutzvorrichtung 9 wahlweise in der in Fig. 1 gezeigten Form montiert werden, in der die Lauffläche 21 des Laufgürtels 13 radial nach außen zeigt und im Betrieb tatsächlich Kontakt mit der Fahrunterlage beispielsweise einer eis- oder schneebedeckten Straße hat, oder in der gewendeten Form. In der gewendeten Form zeigt die Lauffläche 21 zu dem Reifen 3 während die Lauffläche 22 radial nach außen von der Anordnung weg zeigt und mit der Fahrunterlage Kontakt hat.

Die Nähte zwischen dem Laufgürtel 13 und 11 und 12 sind so gestaltet, dass die Wendbarkeit ohne Beschädigung der Nähte möglich ist.

Mit Hilfe der wendbaren Gleitschutzeinrichtung 9 ist es möglich, die eine Lauffläche oder Laufseite 21 oder 22 im Sinne einer guten Traktion auf Eis und die andere Lauffläche 21 oder 22 im Sinne einer guten Traktion auf Schnee zu gestalten bzw. zu optimieren.

Wenn auf die Wendbarkeit verzichtet wird und lediglich eine gute Traktion auf Eis gewünscht ist, ist die gezeigte Anordnung in der gleichen Weise zu verwenden.

Bei einer wendbaren Gleitschutzvorrichtung, wie sie in Fig. 1 gezeigt ist, erhält der Benutzer die Möglichkeit, je nach Straßenverhältnissen, eine optimale Gleitschutzvorrichtung zu bekommen, ohne unterschiedliche Sätze von Gleitschutzvorrichtungen für Schnee- oder Eisbedingungen mitführen zu müssen.

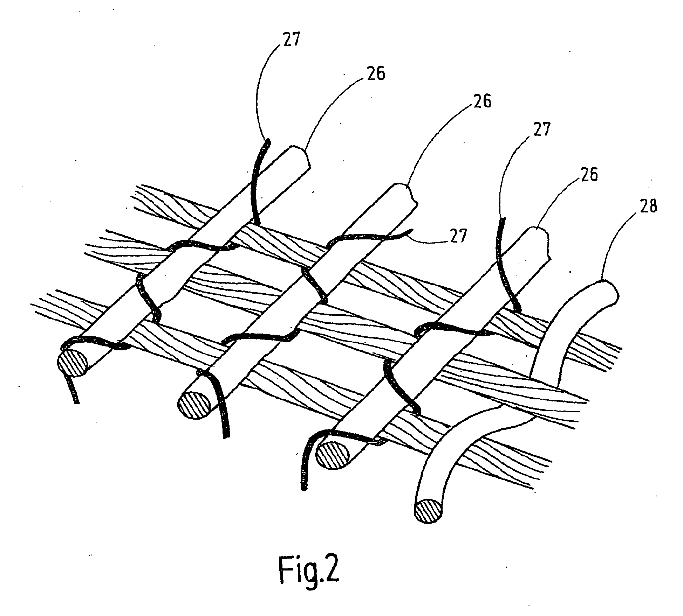

In Fig. 2 ist ausschnittsweise stark vergrößert und vereinfacht ein Gewebe dargestellt, das eine besonders gute Traktion auf Eis zeigt und dessen andere Seite sich für schneebedeckte Straßen eignet.

Das in Fig. 2 gezeigte Gewebe ist ein so genanntes Drehergewebe mit Schussfäden 25 und drei unterschiedlichen Arten von Kettfäden 26, 27 und 28. Die Schussfäden 25 bestehen aus Multifilamentgarnen, die beispielsweise abwechselnd S- oder Z-gedreht sind. Die Multifilamentgarne der Schussfäden 25 setzen sich aus extrem dünnen Monofilamenten zusammen. Das Material ist vorzugsweise Polyester.

Die Kettfäden 26 sind vergleichsweise dicke Monofilamente ebenfalls aus Polyester. Ihr Durchmesser liegt bei ca. 0,4 mm, d.h. im Bereich zwischen 0,2 und ca. 1,5 mm. Die Kettfäden 26 bilden die Trägerkette.

Bei den Kettfäden 27 handelt es sich ebenfalls um Monofilamentgarne mit einem Durchmesser des Monofilaments zwischen 0,05 mm und 0,2 mm, vorzugsweise 0,1 mm.

Das Ensemble der Kettfäden 27 stellt die Dreher- oder Bindekette dar.

Schließlich können optional noch Kettfäden 28 vorhanden sein, die in dem Sinne einer guten Anschmiegbarkeit von einem Multifilamentgarn ähnlich den Schussfäden 25 gebildet sein können. Sie können als Füllgarne verwendet werden, wenn es darum geht den Abstand zwischen den Kettfäden 26 zu vergrößern.

Die oben verwendete Terminologie ist die Terminologie aus der Webtechnik. Aus der Sicht der Gleitschutzvorrichtung handelt es sich bei den Schussfäden 26 um Trägerfilamente, die von den Kettfäden 26 als Umwindefilamente mehrfach gekreuzt werden.

Das in Fig. 2 gezeigte Gewebe ist ein so genanntes Drehergewebe, das sich dadurch auszeichnet, dass der Dreherkettfaden auf der dem Betrachter zugekehrten Seite ständig den Trägerkettfaden überkreuzt. Auf der dem Betrachter abgekehrten Seite überkreuzt der Dreherkettfaden 27 die Schussfäden 25 und zieht sie gegen die Rückseite der Trägerkette fest. Der Begriff Rückseite bezieht sich hier auf die Darstellung von Fig. 2 und meint die von dem Betrachter weg zeigende Seite.

Bei dem gezeigten Drehergewebe liegen sämtliche Schussfäden 26 auf derselben Seite der Trägerfilamente 26 / Trägerkette. Hingegen kreuzt ein Umwindefilament 27 sein zugehöriges Trägerfilament 26 im Bereich eines jeden Schusses.

Der Abstand der Überkreuzungen des Trägerfilaments auf dem Betrachter zugekehrten Seite kann vergrößert werden, indem mehrere Schussfäden 25 nebeneinander liegend eingeschossen werden, wie dies in der Webtechnik bekannt ist.

In Fig. 2 ist das Drehergewebe vereinfacht so dargestellt, dass zwischen benachbarten Trägerfilamenten 26 oder in der Sprache der Weberei, Trägerkettfäden 26, keine anderen Schussfäden verwendet werden. Es ist jedoch vorteilhaft den Abstand zwischen benachbarten Trägerfilamenten 26 auf beispielsweise 3 mm bis 8 mm zu vergrößern, indem zwischen benachbarten Trägerfilamenten 26 Kettfäden 28 verwendet werden, die in Leinwandbindung mit den Schussfäden 25 verwoben sind. Es entsteht so ein Gewebe, das zwei deutlich unterscheidbare Seiten hat. Auf der einen Seite sind die Trägerfilamente 26 mit den Umwindefilamenten 27 zu sehen, während auf der anderen Seite praktisch nur die Kettfäden 25 und die Schussfäden 25 zu sehen sind.

Die Seite mit den sichtbaren Umwindefilamenten 27 stellt die Eisseite dar, während die andere Seite die Schneeseite ist.

Die bisherige Theorie geht dahin, dass auf der Kontaktfläche sich die über die Trägerfilamente 26 erhöhenden Umwindefilamente 27 in die Eisoberfläche eindrücken. Hierdurch entsteht ein Formschluss, der die Reibung zwischen Reifen und Unterlage erhöht. Die Anzahl der durch die Umwindefilamente gebildeten Erhöhungen darf ein vorbestimmtes Maß nicht überschreiten, weil sonst der Eindrückeffekt in die Eisoberfläche verschwindet.

Die Schneeseite dagegen, die von einem vergleichsweise weichen Leinwandgewebe gebildet ist, zeigt eine gute Traktion auf Schnee, weil die Multifilamentgarne mit den Schneekristallen in Wechselwirkung treten und außerdem verhindern, dass die Oberfläche nass und damit glatt wird.

Das gezeigte Drehergewebe wird vorteilhafterweise so eingesetzt, dass die Trägerfilamente, die bei der Herstellung den Kettfäden entsprechen, in Umfangsrichtung des Laufgürtels 13 liegen. Eine andere Orientierung ist ebenfalls möglich.

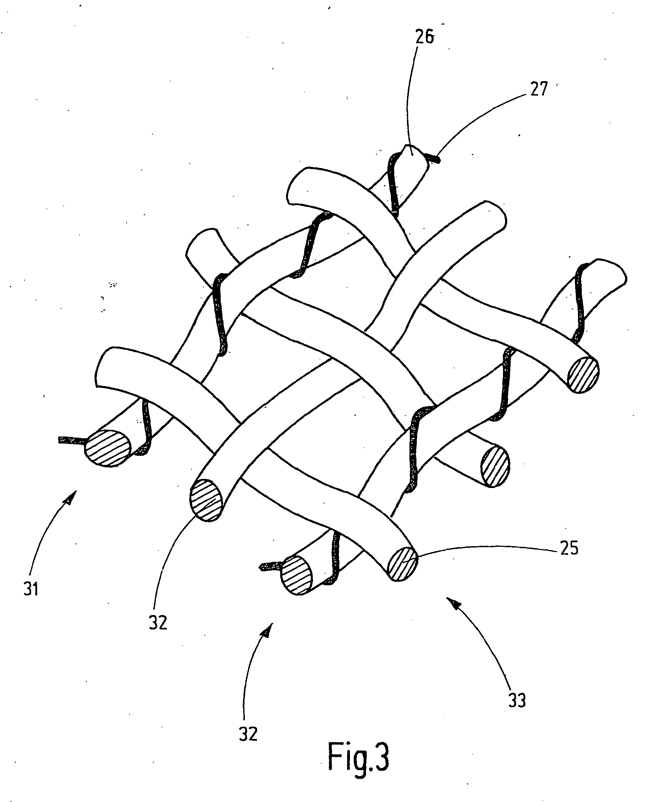

Als Material für den Laufgürtel 13 kann anstelle des gezeigten Drehergewebes nach Fig. 2 ein Gewebe in Leinwandbindung, entsprechend Fig. 3, verwendet werden. Die einander entsprechenden Fäden sind mit demselben Bezugszeichen versehen. Der wesentliche Unterschied besteht darin, dass das Umwindefilament keinen eigenen Kettfaden darstellt, sondern von Haus aus um das betreffende Trägerfilament schraubenförmig aufgewickelt ist. Es entsteht so ein Kombifaden aus einer Seele, gebildet durch das Trägerfilament 26 und dem Umwindefilament 27, das auf der Außenseite eine Schraube bildet. Es entsteht quasi eine rundum, schräg verzahnte Zahnstage mit einer Zahnhöhe entsprechend der Dicke des Umwindefilaments 27 in der Größenordnung von um die 0,1 mm. Die Steigung beträgt ca. 2 mm bis 10 mm. Der Durchmesser der Seele, gebildet durch das Trägerfilament 26 liegt in der Größenordnung wie zuvor, zwischen 0,2 mm und 1,5 mm.

Als Material für das Trägerfilament kommt wiederum Polyester in Frage. Das Umwindefilament kann aus Polyester oder Edelstahl bestehen.

Die Dicke der Trägerfilamente 26 wird bei beiden Ausführungsbeispielen letztlich durch die gewünschte Biegeschlaffheit des Laufgürtels 13 begrenzt. Je kleiner die Rücksprungkräfte sein sollen, um so kleiner ist der Durchmesser der Trägerfilamente 26 zu wählen.

Bei dem Ausführungsbeispiel nach Fig. 3 können die Trägerfilamente 26 mit den darauf gewickelten Umwindefilamenten 27 beispielsweise wie zuvor Kettfäden 31 bilden, zwischen denen andere Kettfäden 32, beispielsweise als Multifilamentgarne eingewoben sind. Die Schussfäden 33 sind wiederum Multifilamentgarne, ähnlich dem Multifilamentgarnen 25, das den Schussfaden in dem Drehergewebe nach Fig. 2 bildet.

Die gezeigte Bindungsart ist eine Leinwandbindung. An ihrer Stelle kann auch eine Köper- oder eine Atlasbindung treten, bei der sich das Verhältnis der auf einer Seite sichtbaren Schussfäden zu der Anzahl der Kettfäden ändert.

Wenn zum Herstellen des Gewebes nach Fig. 3 ein von Haus aus umwundener Faden in Form eines Monofilaments verwendet wird, ist es auch möglich Kett- und Schussfäden zu tauschen. In diesem Falle sind die Fäden 33 die Kettfäden, während die Fäden 31 Schussfäden sind. Zwischen benachbarten Schussfäden 31 mit Umwindefilament befinden sich als Abstandshalter als Monofilament ausgeführte Schussfäden 32.

Bei dem gezeigten Gewebe können, je nach Herstellungsart wahlweise die Trägerfilamente 27 in Umfangsrichtung des Laufgürtels 13, oder quer dazu, liegen. Letzteres wird möglich, wenn die Trägerfilamente 26 die Schussfäden darstellen.

Die Trägerfilamente 27 können abwechselnd s- oder z-gedreht mit den Umwindefilamenten 26 umwunden sein, d.h. die Umwindefilamente 26 bilden jeweils eine Rechts- oder eine Linksschraube auf dem zugehörigen Trägerfilament 27.

Eine Gleitschutzvorrichtung für Kraftfahrzeugräder weist einen Laufgürtel auf. Der Laufgürtel ist zumindest auf einer Seite so gestaltet, dass dort Trägerfilamente zu sehen sind, die auf der Sichtseite mehrfach von ein und demselben Umwindefilament gekreuzt werden. Das Umwindefilament hat einen sehr kleinen Durchmesser im Bereich zwischen 0,5 mm und 0,2 mm.

## Patentansprüche

1. Gleitschutzvorrichtung (9) für Kraftfahrzeugräder (1), die eine Radinnenseite, eine Radaußenseite und eine Lauffläche (7) aufweisen,
mit einem ersten Fixiermittel (11), das bei montierter
Gleitschutzvorrichtung (9) an der Radinnenseite angeordnet ist,
mit einem zweiten Fixiermittel (12), das bei montierter
Gleitschutzvorrichtung (9) an der Radaußenseite angeordnet ist,
mit einem Laufgürtel (13), der bei montierter Gleitschutzvorrichtung (9) auf der Lauffläche (7) liegt und zwei seitliche Längskanten aufweist, von denen die eine mit dem ersten Fixiermittel (11) und die andere Kante mit dem zweiten Fixiermittel (12) verbunden ist, die zusammen den Laufgürtel (13) gegen ein seitliches Herunterlaufen von der Lauffläche (7) hindern, **dadurch gekennzeichnet, dass**
eine Seite (21,22) des Laufgürtels (13) im Sinne einer guten Traktion auf Eis und die andere Seite (21,22) im Sinne einer guten Traktion auf Schnee ausgelegt ist, wobei
der Laufgürtel (13) auf der von der Lauffläche (7) weg
weisenden Seite, der Eisseite, eine Vielzahl von Trägerfilamenten (26) aufweist sowie eine Vielzahl von Umwindefilamenten (27),
wobei die Umwindefilamente (27) die Trägerfilamente (26)
zumindest über einen Umfangswinkel von mehr als 40° umgeben und längs jedes Trägerfilaments (26) voneinander beabstandete Erhöhungen auf den Trägerfilamenten (26) bilden und von denen jedes betrachtete Umwindefilament (27) ein betrachtetes Trägerfilament (26) auf der Kontaktseite zum Untergrund mehrfach kreuzt.

2. Gleitschutzvorrichtung nach Anspruch 1, **dadurch gekennzeichnet, dass** die Filamente (26, 27) zumindest angenähert zylindrisch sind.

3. Gleitschutzvorrichtung nach Anspruch 1, **dadurch gekennzeichnet, dass** das erste Fixiermittel (11) und/oder das zweite Fixiermittel (12) biegeschlaff sind.

4. Gleitschutzvorrichtung nach Anspruch 1, **dadurch gekennzeichnet, dass** das erste Fixiermittel (11) einen Ring aufweist.

5. Gleitschutzvorrichtung nach Anspruch 4, **dadurch gekennzeichnet, dass** der Ring (11) von einem Gewebe gebildet ist.

6. Gleitschutzvorrichtung nach Anspruch 4, **dadurch gekennzeichnet, dass** das erste Fixiermittel (11) an seiner von dem Laufgürtel (7) abliegenden Kante zu einer Schlaufe (16) gelegt ist.

7. Gleitschutzvorrichtung nach Anspruch 6, **dadurch gekennzeichnet, dass** in der Schlaufe (16) ein elastomerer Ring (17) liegt.

8. Gleitschutzvorrichtung nach Anspruch 1, **dadurch gekennzeichnet, dass** das zweite Fixiermittel (12) von einem textilen Flächenelement, vorzugsweise einem Gewebe, gebildet ist.

9. Gleitschutzvorrichtung nach Anspruch 8, **dadurch gekennzeichnet, dass** das zweite Fixiermittel (12) die Radaußenseite vollflächig überspannt.

10. Gleitschutzvorrichtung nach Anspruch 1, **dadurch gekennzeichnet, dass** der Laufgürtel (13) biegeschlaff ist.

11. Gleitschutzvorrichtung nach Anspruch 1, **dadurch gekennzeichnet, dass** der Laufgürtel (13) ein textiles Flächengebilde aufweist oder daraus besteht.

12. Gleitschutzvorrichtung nach Anspruch 11, **dadurch gekennzeichnet, dass** das textile Flächengebilde ein Gewebe ist.

13. Gleitschutzvorrichtung nach Anspruch 1, **dadurch gekennzeichnet, dass** die Filamente (26, 27) zumindest angenähert zylindrisch sind.

14. Gleitschutzvorrichtung nach Anspruch 1, **dadurch gekennzeichnet, dass** die Trägerfilamente (26) wenigstens eine Härte entsprechend einem E-Modul von 3000 N/mm², vorzugsweise bei ca. 250 bis 700 cN/tex, und vorzugsweise höchstens bei einem E-Modul von ca. 1800 cN/tex, vorzugsweise bei einem E-Modul von ca. 1000 cN/tex endet.

15. Gleitschutzvorrichtung nach Anspruch 1, **dadurch gekennzeichnet, dass** die Umwindefilamente (27) wenigstens eine Härte entsprechend einem E-Modul von 3000 N/mm², vorzugsweise von ca. 250 bis 700 cN/tex aufweisen, wenn es sich um thermoplastische Materialien handelt.

16. Gleitschutzvorrichtung nach Anspruch 1, **dadurch gekennzeichnet, dass** die Trägerfilamente (26) Schussfäden oder Kettfäden bilden.

17. Gleitschutzvorrichtung nach Anspruch 1, **dadurch gekennzeichnet, dass** die Umwindefilamente (27) von Kettfäden gebildet sind.

18. Gleitschutzvorrichtung nach Anspruch 1, **dadurch gekennzeichnet, dass** die Schuss- oder die Kettfäden (26, 27) jeweils Monofilamente sind, die von einem Monofilament umwunden sind, das ein Umwindefilament (27) bildet.

19. Gleitschutzvorrichtung nach Anspruch 1, **dadurch gekennzeichnet, dass** das Trägerfilament (26) einen Durchmesser zwischen 0,2 mm und 1 mm, vorzugsweise um 0,5 mm aufweist.

20. Gleitschutzvorrichtung nach Anspruch 1, **dadurch gekennzeichnet, dass** der Durchmesser des Umwindefilaments (27) zwischen 0,05 mm und 0,2mm, vorzugsweise um 0,1 mm liegt.

21. Gleitschutzvorrichtung nach Anspruch 1, **dadurch gekennzeichnet, dass** das Material für das Trägerfilament (26) oder für das Umwindefilament (27) oder für das Multifilamentgarn Polyester ist.

22. Gleitschutzvorrichtung nach Anspruch 1, **dadurch gekennzeichnet, dass** das Material für das Umwindefilament (27) Edelstahl ist.

23. Gleitschutzvorrichtung nach Anspruch 1, **dadurch gekennzeichnet, dass** das Gewebe ein Drehergewebe ist, bei dem die Umwindefilamente (27) von Dreherkettfäden gebildet sind.

24. Gleitschutzvorrichtung nach Anspruch 1, **dadurch gekennzeichnet, dass** das Gewebe ein Gewebe ist, bei dem Schussfäden oder die Kettfäden von Umwindegarnen gebildet sind.

25. Gleitschutzvorrichtung nach Anspruch 1, **dadurch gekennzeichnet, dass** die Umwindefilamente Kettfäden bilden.

## Claims

1. Anti-skid device (9) for motor vehicle wheels (1), which have a wheel inside surface, a wheel outside surface and a tread (7),
with a first fastening element (11), which is arranged on the wheel inside surface when the anti-skid device (9) is mounted,
with a second fastening element (12), which is arranged on the wheel outside surface when the anti-skid device (9) is mounted,
with a tread belt (13), which lies on the tread (7) when the anti-skid device (9) is mounted and has two longitudinal side edges, of which one is connected to the first fastening element (11) and the other edge is connected to the second fastening element (12), said edges together preventing the tread belt (13) from falling laterally off the tread (7), **characterised in that** one side (21, 22) of the tread belt (13) is designed for the purpose of good traction on ice and the other side (21, 22) is designed for the purpose of good traction on snow,
wherein
the tread belt (13) on the side directed away from the tread (7), the ice side, has a plurality of support filaments (26) as well as a plurality of wrapping filaments (27),
wherein the wrapping filaments (27) surround the support filaments (26) at least over an angle at circumference of more than 40° and along each support filament (26) form raised sections spaced from one another on the support filaments (26) and of which each viewed wrapping filament (27) crosses a viewed support filament (26) multiple times on the contact side to the substrate.

2. Anti-skid device according to claim 1, **characterised in that** the filaments (26, 27) are at least approximately cylindrical.

3. Anti-skid device according to claim 1, **characterised in that** the first fastening element (11) and/or the second fastening element (12) are pliant.

4. Anti-skid device according to claim 1, **characterised in that** the first fastening element (11) has a ring.

5. Anti-skid device according to claim 4, **characterised in that** the ring (11) is formed by a woven fabric.

6. Anti-skid device according to claim 4, **characterised in that** on its edge remote from the tread belt (7) the first fastening element (11) is laid to form a loop.

7. Anti-skid device according to claim 6, **characterised in that** an elastomer ring (17) lies in the loop (16).

8. Anti-skid device according to claim 1, **characterised in that** the second fastening element (12) is formed by a textile fabric, preferably a woven fabric.

9. Anti-skid device according to claim 8, **characterised in that** the second fastening element (12) completely spans the wheel outside surface.

10. Anti-skid device according to claim 1, **characterised in that** the tread belt (13) is pliant.

11. Anti-skid device according to claim 1, **characterised in that** the tread belt (13) has a textile fabric or is made therefrom.

12. Anti-skid device according to claim 11, **characterised in that** the textile fabric is a woven fabric.

13. Anti-skid device according to claim 1, **characterised in that** the filaments (26, 27) are at least approximately cylindrical.

14. Anti-skid device of claim 1, **characterized in that** said support filaments (26) comprise a hardness ranging from a modulus of elasticity of least 3000N/mm², preferably 250 to 700 cN/tex to a modulus of elasticity of approximately 1800 cN/tex preferentially being approximately 1000 cN/tex.

15. Anti-skid device according to claim 1, **characterised in that** the wrapping filaments (27) have at least a hardness corresponding to a modulus of elasticity of 3000 N/mm², preferably of approximately 250 to 700 cN/tex, when made from thermoplastic materials.

16. Anti-skid device according to claim 1, **characterised in that** the support filaments (26) form weft threads or warp threads.

17. Anti-skid device according to claim 1, **characterised in that** the wrapping filaments (27) are formed by warp threads.

18. Anti-skid device according to claim 1, **characterised in that** the weft or warp threads (26, 27) are respectively monofilaments, which are wrapped by a monofilament forming a wrapping filament (27).

19. Anti-skid device according to claim 1, **characterised in that** the support filament (26) has a diameter of between 0.2 mm and 1 mm, preferably around 0.5 mm.

20. Anti-skid device according to claim 1, **characterised in that** the diameter of the wrapping filament (27) lies between 0.05 mm and 0.2 mm, preferably around 0.1 mm.

21. Anti-skid device according to claim 1, **characterised in that** the material for the support filament (26) or for the wrapping filament (27) or for the multifilament yarn is polyester.

22. Anti-skid device according to claim 1, **characterised in that** the material for the wrapping filament (27) is special steel.

23. Anti-skid device according to claim 1, **characterised in that** the woven fabric is a gauze fabric, in which the wrapping filaments (27) are formed by doup warp threads.

24. Anti-skid device according to claim 1, **characterised in that** the woven fabric is a fabric, in which the weft threads or the warp threads are formed by wrapping yarns.

25. Anti-skid device according to claim 1, **characterised in that** the wrapping filaments form warp threads.

## Revendications

1. Dispositif antidérapant (9) pour des roues (1) de véhicule automobile qui présentent une face interne, une face externe et une surface de roulement (7), ce dispositif comportant :
- un premier moyen de fixation (11) qui est disposé sur la face interne de roue quand le dispositif antidérapant (9) est monté,
- un second moyen de fixation (12) qui est disposé sur la face externe de roue quand le dispositif antidérapant (9) est monté,
- une ceinture de roulement (13) qui est disposée sur la surface de roulement (7) quand le dispositif antidérapant (9) est monté et qui présente sur les côtés deux arêtes longitudinales dont l'une est reliée au premier moyen de fixation (11) et l'autre au second moyen de fixation (12) et font ensemble obstacle à ce que la ceinture de roulement (13) s'échappe latéralement de la surface de roulement (7), ce dispositif antidérapant étant **caractérisé en ce que**
- un côté (21, 22) de la ceinture de roulement (13) est conçu en vue d'assurer une bonne traction sur la glace tandis que l'autre côté (21, 22) est conçu en vue d'assurer une bonne traction sur la neige,
- la ceinture de roulement (13) présente sur le côté regardant à l'opposé de la surface de roulement (7) du pneu c'est-à-dire sur le côté de glace, une pluralité de filaments porteurs (26) ainsi qu'une pluralité de filaments enveloppés (27),
- les filaments enveloppés (27) entourent les filaments porteurs (26) selon un angle d'enroulement de plus de 40° et forment le long de chaque filament porteur (26) des saillies espacées, chaque filament enveloppé (27) croisant plusieurs fois un même filament porteur (26) sur le côté de contact situé en direction du sol.

2. Dispositif antidérapant selon la revendication 1, **caractérisé en ce que** les filaments (26, 27) sont au moins à peu près cylindriques.

3. Dispositif antidérapant selon la revendication 1, **caractérisé en ce que** le premier moyen de fixation (11) et/ou le second moyen de fixation (12) sont mous en flexion.

4. Dispositif antidérapant selon la revendication 1, **caractérisé en ce que** le premier moyen de fixation (11) est un anneau.

5. Dispositif antidérapant selon la revendication 4, **caractérisé en ce que** l'anneau (11) est en tissu.

6. Dispositif antidérapant selon la revendication 4, **caractérisé en ce que** le premier moyen de fixation (11), le long de son bord éloigné de la ceinture de roulement (13) présente un passant (16).

7. Dispositif antidérapant selon la revendication 6, **caractérisé en ce que** dans le passant (16) est logé un anneau (17) en élastomère.

8. Dispositif antidérapant selon la revendication 1, **caractérisé en ce que** le second moyen de fixation (12) est constitué par un élément textile plat, de préférence un tissu.

9. Dispositif antidérapant selon la revendication 8, **caractérisé en ce que** le second moyen de fixation (12) met en tension sur toute sa surface la face externe de la roue.

10. Dispositif antidérapant selon la revendication 1, **caractérisé en ce que** la ceinture de roulement (13) est molle en flexion.

11. Dispositif antidérapant selon la revendication 1, **caractérisé en ce que** la ceinture de roulement (13) présente un produit plat textile ou est constituée par ce produit.

12. Dispositif antidérapant selon la revendication 11, **caractérisé en ce que** le produit plat textile est un tissu.

13. Dispositif antidérapant selon la revendication 1, **caractérisé en ce que** les filaments (26, 27) sont au moins à peu près cylindriques.

14. Dispositif antidérapant selon la revendication 1, **caractérisé en ce que** les filaments porteurs (26) présentent au moins une dureté se situant dans un domaine qui, avec un module d'élasticité de 3000 N/mm², commence de préférence à environ 250 à 700 cN/tex et se termine de préférence au plus avec un module d'élasticité d'environ 1800 cN/tex, de préférence un module d'élasticité d'environ 1000 cN/tex.

15. Dispositif antidérapant selon la revendication 1, **caractérisé en ce que** les filaments enveloppés (27) présentent une dureté correspondant à un module d'élasticité de 3000 N/mm², de préférence d'environ 250 à 700 cN/tex, quand il s'agit de matériaux thermoplastiques.

16. Dispositif antidérapant selon la revendication 1, **caractérisé en ce que** les filaments porteurs (26) forment des fils de trame ou des fils de chaîne.

17. Dispositif antidérapant selon la revendication 1, **caractérisé en ce que** les filaments enveloppés (27) sont constitués de fils de chaîne.

18. Dispositif antidérapant selon la revendication 1, **caractérisé en ce que** les fils de chaîne ou de trame (26, 27) sont constitués chacun par un monofilament enveloppé par un monofilament qui forme ainsi le filament enveloppé (27).

19. Dispositif antidérapant selon la revendication 1, **caractérisé en ce que** le filament porteur (26) a un diamètre compris entre 0,2mm et 1mm, de préférence autour de 0,5mm.

20. Dispositif antidérapant selon la revendication 1, **caractérisé en ce que** le filament enveloppé (27) a un diamètre compris entre 0,05mm et 0,2mm, de préférence autour de 0,1mm.

21. Dispositif antidérapant selon la revendication 1, **caractérisé en ce que** le matériau pour réaliser le filament porteur (26) ou le filament enveloppé (27) ou le fil en multifilaments est un polyester.

22. Dispositif antidérapant selon la revendication 1, **caractérisé en ce que** le matériau pour réaliser le filament enveloppé (27) est de l'acier spécial.

23. Dispositif antidérapant selon la revendication 1, **caractérisé en ce que** le tissu est un tissu de gaze, dans lequel les filaments enveloppés (27) sont des fils de chaîne de gaze.

24. Dispositif antidérapant selon la revendication 1, **caractérisé en ce que** le tissu est un tissu dont les fils de chaîne ou les fils de trame sont des fils enveloppés.

25. Dispositif antidérapant selon la revendication 1, **caractérisé en ce que** les filaments enveloppés constituent les fils de chaîne.
